# EUROPEAN PATENT APPLICATION

(11) **EP 0 701 939 A2**
(43) Date of publication of application: **20.03.1996**
(21) Application number: 95306155.3
(22) Date of filing: 04.09.1995
(51) Int. Cl.: B62B 3/18, B62B 5/04

(54) **Trolley comprising a control device for the swivel castor and a protective rim for the basket**

(30) Priority: 19.09.1994 GB 9419130
(71) Applicant: CLARES MERCHANDISE HANDLING EQUIPMENT LIMITED, Wells, Somerset BA5 1UT (GB)
(72) Inventor: Griffiths, Roy Garrard, Bath, BA2 4LR (GB)
(74) Representative: Brown, Kenneth Richard

(57) **Abstract**

A shopping trolley comprising a wheeled chassis (11) and a basket (14), the trolley having a frame member (15) which extends continuously from the upper rear of the trolley to the lower front of the trolley. The frame member (15) is hollow and houses a control cable (30) linking a hand-control (21) at the rear of the trolley to a steering mechanism acting on the front castors (12). A protective cover member (29) is fitted over an upper rim of the basket.

## Description

The invention relates to a trolley of a type having a basket for holding items to be transported. For convenience a shopping trolley in which the basket is intended for holding purchases in a supermarket, will be described herein.

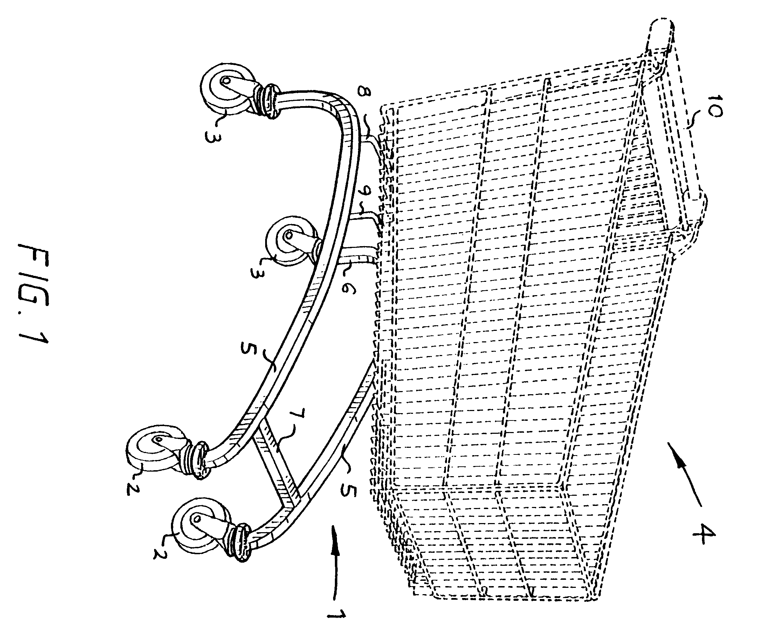

One known shopping trolley is shown in Fig. 1. The trolley comprises a wheeled chassis 1, shown in solid lines, having front and rear castors 2,3, and a basket 4 for goods, shown in dotted lines, which is mounted on the chassis. The chassis 1 has two forwardly-extending members 5 of an arched configuration at each end of which is mounted a castor. Two structural crossbars 6,7 interconnect the members 5, the rearmore crossbar 6 extending vertically upwards to provide a mounting support for the basket 4. The basket 4 is also secured towards the rear to a further one or two lateral support members 8,9. A handlebar 10 is provided about the upper rear of the trolley, secured to the top of the basket.

One of the continuing problems facing the shopping trolley manufacturer is how to achieve good manoeuvrability. Probably everyone has encountered the supermarket trolley which refuses to move in the direction it is pushed, especially when laden with goods and on the inclined surface of the car park. For accurate steering of the trolley, the correct orientation of the front swivel castor or castors must be established. There are various ways of biasing the front swivel castors in favour of the straight-ahead direction of the trolley. The methods, however, tend to have a noticeable effect on the feel or handling of the trolley, which often causes the user to reject it as defective.

It has been proposed to provide a mechanism in association with each of two front swivel castors which, when activated, causes the wheel to be locked in alignment with the direction in which the trolley is pointed. The mechanism is hand-operated by a control provided on or near the handlebar. This design requires an obtrusive connection between the control and the mechanism.

Concurrently with but independently of the considerations of manoeuvrability, the manufacturer continues to seek to improve the trolley in other respects of interest to the user, such as comfort and appearance.

In one aspect, the invention provides a trolley comprising a wheeled chassis and a basket, the trolley having a frame member which extends continuously from the upper rear of the trolley to the lower front of the trolley, wherein said frame member comprises a conduit which accommodates a mechanical link extending to the front of the trolley.

This arrangement enables the chassis and the basket to be integrated in a strong and rigid structure, in which the frame member accommodates a mechanical link, such as a control cable for coupling a hand-operable control at the rear of the trolley to a mechanism which acts on a front castor, such as the wheel-aligning mechanism mentioned previously. The frame member thus houses, protects and conceals the control cable, preventing accidental damage, avoiding the prying hands of inquisitive children and contributing to the appearance of the trolley as a whole. Moreover, the mechanism and hand-operable control make the trolley easy to manoeuvre.

In a preferred embodiment, there are two such frame members extending on respective sides of the trolley. In this embodiment, the hand-operable control preferably comprises a pivoted bar associated with the trolley handlebar. The front castor(s) is (are) normally free to swivel. When steering control is required, the user simply pulls the control bar towards the handlebar to operate the mechanism and lock the front wheel(s) in the forward direction. This is an easy action to perform, even for an elderly or infirm shopper.

Preferably, a respective leg bearing a rear castor is connected to each main frame member. If the leg is hollow and opens into the main frame member it becomes possible to provide a hidden link between a rear wheel-braking mechanism and an associated control on or near the handle.

In another aspect, the invention provides a trolley comprising a basket, wherein a protective cover member is fitted over an upper rim of the basket.

There are several advantages to this arrangement. First, the rim of the basket is warmer to the touch than the normal exposed metal. (In supermarkets shoppers often grab hold of the top of the basket to move a stationary trolley causing an obstruction.) Secondly, the wire of the basket usually comprises zinc-coated steel to which a protective lacquer is applied at the time of manufacturer. The lacquer soon becomes rubbed off in everyday use, especially on the rim of the basket. The exposed zinc quickly tarnishes to a dirty grey appearance which is tatty compared to the polished look of a new trolley. Thirdly, the provision of the cover member strikingly enhances the appearance of the trolley as a whole.

Preferably, the cover member extends around corners of the basket rim, for example in the case of a supermarket trolley around all three exposed edges of the basket rim, by means of a single component. The front vertical corner edges of the basket may be rounded for this purpose. In this way, substantially the whole of the exposed rim is protected, while only needing one component to be fitted. The cover member may be an extrusion of, say, PVC whose profile ensures a secure fit.

In a further aspect, the invention provides an extrusion specifically adapted to be fitted to the upper rim of a shopping trolley basket and to extend continuously around corners of the rim.

An embodiment of the invention will now be described by way of example with reference to the accompanying drawings, in which:
Fig. 1 shows the known trolley already described;
Fig. 2 is a perspective view of the trolley of the embodiment;
Fig. 3 is a side elevation of the trolley of the embodiment; and
Fig. 4 shows the sectional profile of a component fitted to the trolley basket.

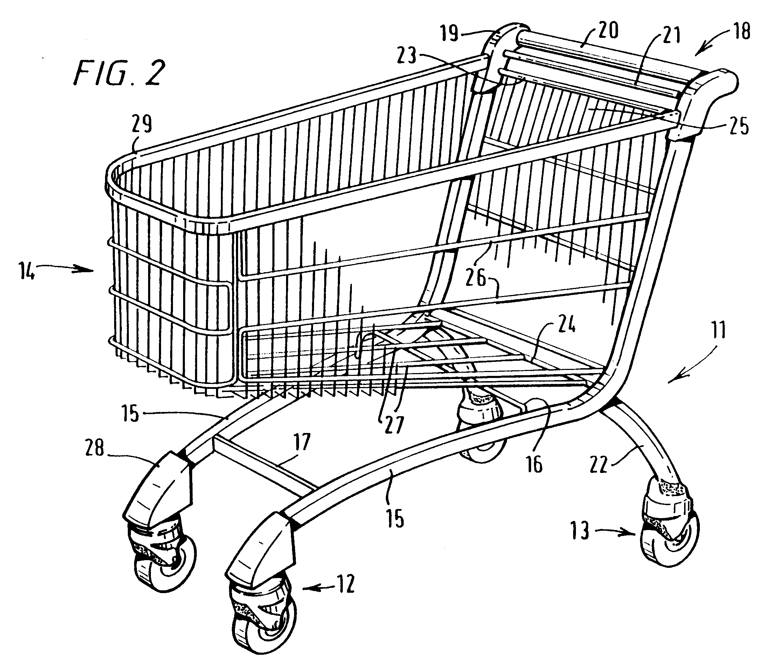

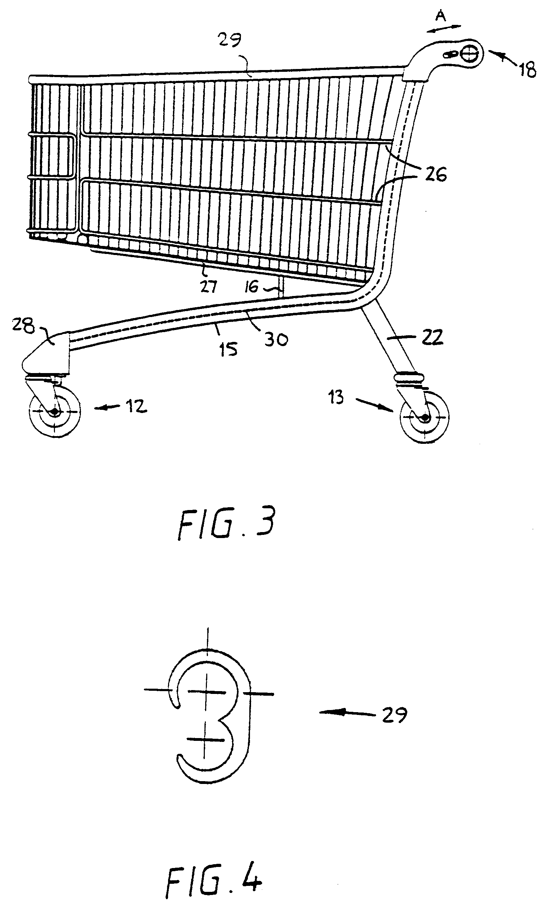

As shown in Figs. 2 and 3, the trolley of the embodiment has two main frame members 15 which extend substantially the whole length of the trolley from the upper rear to the lower front on the respective sides thereof. Each main frame member comprises a portion which extends upwardly from the rear of the trolley and a portion which extends forwardly from the rear, the two portions meeting at a rounded corner so as to form an approximately L- or straightened S- shaped component. At the forward ends the members 15 terminate in respective swivel castors 12, whereas at the rearward ends a handle assembly 18 is provided. A respective leg 22 is welded to the corner of each main frame member 15. The leg 22 extends backwardly and terminates in a rear castor 13 of swivel or fixed type.

The forward portions of the frame members 15 are laterally spaced at the front of the trolley by a connecting crossbar 17 whereas the upwardly-extending portions are secured together at the top and bottom by laterally-extending wire members 23 and 24, to provide uniform spacing of the upper portions of the frame members 15 and a forwardly-tapering separation of the lower portions thereof to enable nesting. The upper wire member 23 provides a fulcrum for an inwardly-swinging wire frame 25 constituting part of the nesting structure. The lower wire member 24 forms an integral part of the basket structure. The basket 14 is secured to the chassis 11 by means of wires 26 of the basket side walls being welded to the upper portions of the frame members 15 and wires 27 of the base being welded to a raised lateral support bar 16.

The frame members 15 and legs 22 are made of hollow tube, which in this embodiment has a flat-sided oval cross-section. In accordance with the first aspect of the invention, and as shown schematically in Fig. 3, the frame member 15 houses a control cable 30, suitably of the type used for example for bicycle brakes. The control cable 30 provides a mechanical link between a mechanism (not shown) associated with the front castor 12 and a hand-operated control associated with the handle assembly 18. In this embodiment, the mechanism comprises a small lever which when the mechanism is activated flicks forward to enter a slot in the front castor housing. In this way, the mechanism locks the castor 12 in a position in which its wheel is aligned with the longitudinal direction of the trolley, thus ensuring that the trolley will move forward in the direction in which the basket is pointed. The mechanism may be such that the castor becomes locked as it swivels through the forwardly-aligned position. The control cable 30 emerging from the forward end of the frame member 15 is coupled to the lever of the locking mechanism and the whole arrangement is protected and concealed by a moulded buffer 28.

In the handle assembly 18 the other end of the control cable 30 is coupled to a control in the form of a bar 21 which extends parallel and adjacent to the handlebar 20. The control bar 21 is pivotally mounted at its two ends, inside the moulded caps 19 of the handle assembly 18 so that the control bar can swing about a pivot axis parallel to and a short spacing from its longitudinal axis. The swing is limited by the size of an elongate slot in the cap 19 and is manifest to the user as a simple sliding motion. The end of the control cable emerging from the upper portion of each frame member 15 is looped around the end of the control bar 21 inside the cap 19. The castor locking mechanism is operated by the user pulling the bar 21 towards the handlebar 20 in a simple and easy motion. The castor locking mechanism is spring-biased into the released condition, in which the castor may freely swivel, whereby the trolley is freely movable when first collected by a shopper and returns to this condition once the control bar 21 has been released. Thus, the trolley is conveniently controlled and steered from the handle.

In a modification of the embodiment, the front or rear castor or castors may be provided with a braking mechanism which is coupled to a hand control via a control cable in the manner already described. If the braking mechanism is applied to the rear castors (which is preferred), then a hole must be made in the corner of the main frame member 15 where the leg 22 is connected, so as to provide a continuous conduit for the control cable from the handle assembly 18 to the rear castor 13 via the upper portion of the frame member 15 and the leg 22. The braking mechanism is operated by the user in the same way and is preferably biased in the unbraked condition.

In accordance with the second aspect of the invention, the basket 14 is fitted with a protective cover member 29 over its upper rim. In this embodiment, the cover member 29 consists of an extrusion of flexible PVC having the sectional profile shown in Fig. 4. As seen from Fig. 1, the upper rim of the basket is commonly formed of a lower wire forming part of the frame of the basket wall and an upper wire forming a generally U-shaped strengthening frame welded to the lower wire, these two wires forming a figure-eight section. The vertically-extending wires of the basket structure are welded on the inside of the lower wire. The extrusion 29 of Fig. 4 has a generally oval outer shape, the internal profile conforming to the shape of the rim. The extrusion is closed on the outer side and open on the lower part of the inner side to accommodate the vertical basket wires.

Preferably the extrusion 29 is a single strip which extends over substantially the total length of the upper edges of the two side walls and the front wall of the basket, or at least around the corners of the rim. In this case, the nose of the basket is preferably rounded as shown in Fig. 2.

The cover member 29, according to the material, may have a snap- or force-fit, or may require softening by heating prior to fitting to the basket.

The invention may be embodied in other specific forms without departing from its scope. In particular, but without limitation, the following is noted. There are many suitable variations of the castor locking mechanism and the hand-operable control. There may be only one front castor. The main frame members 15 may form a continuous loop at the nose of the chassis in a manner known per se in existing trolley designs. The basket rim cover member may have any desired external shape and the internal profile may be varied according to the particular form of the basket rim. The basket is not essentially rectangular in form, nor is it limited to being to the front of the trolley.

## Claims

1. A trolley comprising a wheeled chassis (11) and a basket (14), the trolley having a frame member (15) which extends continuously from the upper rear of the trolley to the lower front of the trolley, wherein said frame member (15) comprises a conduit which accommodates a mechanical link (30) extending to the front of the trolley.

2. A trolley according to claim 1, wherein said mechanical link (30) couples a hand-operable control (21) to a mechanism which acts on a front castor (12).

3. A trolley according to claim 2, wherein the front castor (12) is a swivel castor and said mechanism controls the orientation of the castor wheel.

4. A trolley according to claim 3, wherein said mechanism locks the castor wheel in the direction of forward or rearward travel of the trolley.

5. A trolley according to any of claims 2 to 4, wherein the hand-operable control comprises a pivoting bar (21) extending substantially parallel and adjacent to a handlebar (20) at said upper rear of the trolley.

6. A trolley according to any preceding claim, comprising two said frame members (15) extending as aforesaid on respective sides of the trolley.

7. A trolley according to claim 6, wherein said frame members (15) are secured together at the lower rear of the trolley by a laterally-extending member (24) which forms part of the basket structure.

8. A trolley according to claim 6 or claim 7, wherein said frame members (15) are secured together at the upper rear of the trolley by a laterally-extending member (23) which forms part of the basket structure.

9. A trolley according to any of claims 6 to 8, wherein said frame members (15) are connected together towards the front of the trolley.

10. A trolley according to claim 9, wherein said frame members comprise a continuous loop at the front of the trolley.

11. A trolley according to any preceding claim, comprising a single front castor.

12. A trolley according to any preceding claim, wherein the mechanical link comprises a control cable (30).

13. A trolley comprising a basket (14), wherein a protective cover member (29) is fitted over an upper rim of the basket.

14. A trolley according to claim 13, wherein the cover member (29) comprises a continuous extrusion which extends around the upper edges of three side walls of a generally rectangular basket (14).

15. A trolley according to claim 14, wherein the path of the rim is curved at the corners of the basket (14) around which the cover member (29) extends.

16. A trolley according to any of claims 13 to 15, wherein said cover member (29) is closed on the outer side of the rim and open on the inner side thereof.

17. A trolley according to any of claims 13 to 16, wherein said rim comprises at least one wire and the internal sectional profile of the cover member (29) conforms to the wire section.

18. A trolley according to claim 17, wherein the rim comprises two wires arranged to form a figure-eight section.

19. A trolley according to any of claims 13 to 18, wherein the external sectional shape of the cover member (29) is substantially oval.

20. An extrusion (29) specifically adapted to be fitted over the upper rim of a shopping trolley basket (14) and to extend continuously around corners of the rim.
